# EUROPEAN PATENT APPLICATION

(11) **EP 1 662 501 A2**
(43) Date of publication of application: **31.05.2006**
(21) Application number: 05023687.6
(22) Date of filing: 28.10.2005
(51) Int. Cl.: G11B 17/04, G11B 33/12

(54) **Disk apparatus**

(30) Priority: 25.11.2004 JP 2004340393
(71) Applicant: Orion Electric Company, LTD., Echizen-shi, Fukui-ken (JP)
(72) Inventor: Makino, Takeshi, Echizen-shi Fukui-ken (JP); Nishide, Masahiko, Echizen-shi Fukui-ken (JP)
(74) Representative: Kirschner, Klaus Dieter

(57) **Abstract**

A frame 7 and a damper support 15 are aligned flat and formed integrally with each other through connectors 20, whereby the flame 7 and the clamper support 15 can be formed using a common forming mold. If the clamper support 15 is arranged within an opening 7C, then the forming mold can be made small in size and light in weight, a load applied to a driver for the forming mold can be reduced, and a forming speed can be accelerated. Productivity can be thereby improved. Further, while an upper portion of the frame 7 is opened, such constituent elements as a turntable 4, a pickup lens 5, a feed mechanism 8 of the pickup lens 5 can be attached to the frame 7. Assembly performance can be thereby improved.

## Description

The present invention relates to a disk apparatus that irradiates a laser light on a recording surface of a disk storage medium and that records and reproduces data on and from the disk storage medium. More specifically, the present invention relates to a disk drive apparatus that includes a clamper support that supports a clamper for holding a disk storage medium.

In recent years, the utilization rage of a disk apparatus has widened such as inclusion of the disk apparatus not only in a DVD player, a CD player or the like but also in a television receiver main body so as to meet various users' needs. As a disk apparatus of this type, there is proposed, in Japanese Patent Application Laid-Open No. 2003-217203, a disk apparatus configured as follows. The disk apparatus includes a disk tray on which a disk storage medium (hereinafter, simply "disk") including an opening is mounted, a resin frame movably supporting the disk tray, a turntable fitted in the opening of the disk mounted on the disk tray and floating up the disk from the disk tray, a clamper abutting on the floated up disk from an opposite side to a side on which the turntable is located and thereby chucking the disk to the turntable, and a clamper support supporting the clamper. This clamper support is formed out of a vibration damping steel sheet separately from the frame and fixedly spread between sidewalls of the frame so as to support the clamper.

The disk apparatus disclosed in Japanese Patent Application Laid-Open No. 2003-217203 can inhibit noise and vibration generated by rotation of the disk by forming the clamper support that supports the clamper out of the vibration damping steel sheet separately from the frame that consists of resin. The disk apparatus has, however, the following disadvantages. It is necessary to manufacture the frame and the clamper support in different steps, so that manufacturing steps are complicated. Since the number of assembly components increases, assembly performance is deteriorated. As the disk apparatus of this type, there is also known a disk apparatus configured as follows. The disk apparatus includes a frame for assembling such constituent elements as a tray on which a disk is mounted, a turntable, and a pickup lens, the frame integrally formed with a clamper support supporting a damper by resin. If the frame and the clamper support are integrally formed by resin, a shape of the frame itself is disadvantageously complicated and a structure of a mold for forming the frame is also complicated. Similarly to the disk apparatus disclosed in Japanese Patent Application Laid-Open No. 2003-217203, this disk apparatus has a disadvantage in that manufacturing cost is increased.

The present invention has been achieved to solve the conventional disadvantages. It is an object of the present invention to provide a disk apparatus capable of simplifying a structure of a mold and reducing a manufacturing cost.

A disk apparatus according to a first aspect of the present invention includes: a tray on which a disk storage medium is mounted; a turntable that floats up the disk storage medium mounted on the tray, and that drives the disk storage medium to rotate; a pickup lens that irradiates a laser light on a recording surface of the disk storage medium, and that records and reproduces data in and from the disk storage medium; a frame with which the tray, the turntable, and the pickup lens are assembled, that includes a support frame extending horizontally so as to movably guide the tray and a pair of sidewalls formed integrally with left and right edges of the support frame, respectively, and that consists of resin; a clamper that holds the disk storage medium floated up from the tray between the clamper itself and the turntable; and a clamper support that supports the clamper, and that is provided between the sidewalls, wherein the clamper support is formed by the same resin as that for the frame, the frame is provided to be aligned with the clamper support and formed integrally with the clamper support through a disconnectable connector, and after forming, the clamper support is separated from the frame and provided to be bridged between the sidewalls of the frame.

According to the first aspect of the present invention, by connecting the frame with the clamper support by the connector, the frame and the clamper support can be formed using a common forming mold. In addition, by aligning and integrally forming the clamper support and the frame, the structure of the forming mold is simplified.

According to a second aspect of the present invention, in the disk apparatus according to the first aspect, an opening into which at least the pickup lens is assembled is formed in the support frame, a largest width of the opening is set larger than an entire length of the clamper support, and the clamper support is formed integrally with an interior of the opening through the connector.

According to the second aspect of the present invention, by arranging the clamper support within the opening of the frame, the forming mold can be made small in size.

According to a third aspect of the present invention, in the disk apparatus according to the first aspect, the clamper support is formed integrally with an outside of one edge of the support frame through the connector.

According to the third aspect of the present invention, a size, a shape, and the like of the opening formed in the frame are not restricted by the clamper support but can be freely set. Design flexibility is, therefore, improved.

A disk apparatus according to a fourth aspect of the present invention includes: a tray on which a disk storage medium is mounted; a turntable that floats up the disk storage medium mounted on the tray, and that drives the disk storage medium to rotate; a pickup lens that irradiates a laser light on a recording surface of the disk storage medium, and that records and reproduces data in and from the disk storage medium; a frame with which the tray, the turntable, and the pickup lens are assembled, that includes a support frame extending horizontally so as to movably guide the tray and a pair of sidewalls formed integrally with left and right edges of the support frame, respectively, and that consists of resin; a clamper that holds the disk storage medium floated up from the tray between the clamper itself and the turntable; and a clamper support that supports the clamper, and that is provided between the sidewalls, wherein the clamper support is formed out of the same resin as that for the frame, the frame is provided to be aligned with the clamper support and formed integrally with the clamper support through a hinge, and after forming, the hinge is bent and the clamper support is provided to be bridged between the sidewalls of the frame.

According to the fourth aspect of the present invention, the clamper support can be easily attached to the frame only by bending the hinge and folding back the clamper support inside.

According to a fifth aspect of the present invention, in the disk apparatus according to the fourth aspect, one end of the clamper support is located on an extension of an attachment position of one of the sidewalls through the hinge and provided continuously with an outside of the one sidewall, and after the hinge is folded back inside and the clamper support is provided to be bridged between the sidewalls of the frame, the other end of the clamper support is fixed to the other sidewall.

According to the fifth aspect of the present invention, the clamper support is formed integrally with the frame so as to extend on the extension of the attachment position of the sidewall. Therefore, the clamper support can be easily fixed to the frame only by bending the hinge and folding back the clamper support inside.

According to a sixth aspect of the present invention, in the disk apparatus according to the fourth aspect, the clamper support is a T-shaped clamper support including a strip plate portion bridged between the sidewalls, and a protrusion portion extending from a central portion of the strip plate portion to a rear end of the frame, a bent portion bent into an L shape is formed on a rear end of the protrusion portion, an end of the bent portion is provided continuously with an outside of a rear end of the frame through the hinge, and the hinge is folded back inside and the strip plate portion of the clamper support is provided to be bridged between the sidewalls of the frame.

According to the sixth aspect of the present invention, the clamper support is T-shaped and the pickup lens assembled with the frame and the like are covered with the strip plate portion. Due to this, during adjustment of the pickup lens, for example, the strip plate portion functions as an external light shielding wall for the pickup lens.

The disk apparatus according to the first aspect of the present invention includes: a tray on which a disk storage medium is mounted; a turntable that floats up the disk storage medium mounted on the tray, and that drives the disk storage medium to rotate; a pickup lens that irradiates a laser light on a recording surface of the disk storage medium, and that records and reproduces data in and from the disk storage medium; a frame with which the tray, the turntable, and the pickup lens are assembled, that includes a support frame extending horizontally so as to movably guide the tray and a pair of sidewalls formed integrally with left and right edges of the support frame, respectively, and that consists of resin; a clamper that holds the disk storage medium floated up from the tray between the clamper itself and the turntable; and a clamper support that supports the clamper, and that is provided between the sidewalls, wherein the clamper support is formed out of the same resin as that for the frame, the frame is provided to be aligned with the clamper support and formed integrally with the clamper support through a disconnectable connector, and after forming, the clamper support is separated from the frame and provided to be bridged between the sidewalls of the frame. Therefore, the frame and the clamper support can be formed using a common forming mold. In addition, by aligning and integrally forming the clamper support and the frame, the structure of the forming mold is simplified. Thus, a manufacturing cost of the forming mold can be reduced. Further, by separating the clamper support from the frame and assembling the clamper support after formation, such constituent elements such as the turntable, the pickup lens, and the feed mechanism of the pickup lens can be assembled with the frame while the upper portion of the frame is opened, and the clamper can be also easily assembled with the clamper support. Assembly operation efficiency can be, therefore, improved.

According to the second aspect of the present invention, in the disk apparatus according to the first aspect, an opening into which at least the pickup lens is assembled is formed in the support frame, a largest width of the opening is set larger than an entire length of the clamper support, and the clamper support is formed integrally with an interior of the opening through the connector. Therefore, by arranging the clamper support within the opening of the frame, the forming mold can be made small in size. Since the forming mold can be made small in size and light in weight, a load applied to the driver for the forming mold can be reduced and a forming speed can be accelerated during forming. Productivity can be thereby improved.

According to the third aspect of the present invention, in the disk apparatus according to the first aspect, the clamper support is formed integrally with an outside of one edge of the support frame through the connector. Therefore, a shape of the opening formed in the frame is not restricted by the clamper support but can be freely set. Design flexibility is, therefore, improved.

The disk apparatus according to the fourth aspect of the present invention includes: a tray on which a disk storage medium is mounted; a turntable that floats up the disk storage medium mounted on the tray, and that drives the disk storage medium to rotate; a pickup lens that irradiates a laser light on a recording surface of the disk storage medium, and that records and reproduces data in and from the disk storage medium; a frame with which the tray, the turntable, and the pickup lens are assembled, that includes a support frame extending horizontally so as to movably guide the tray and a pair of sidewalls formed integrally with left and right edges of the support frame, respectively, and that consists of resin; a clamper that holds the disk storage medium floated up from the tray between the clamper itself and the turntable; and a clamper support that supports the clamper, and that is provided between the sidewalls, wherein the clamper support is formed out of the same resin as that for the frame, the frame is provided to be aligned with the clamper support and formed integrally with the clamper support through a hinge, and after forming, the hinge is bent and the clamper support is provided to be bridged between the sidewalls of the frame. Therefore, the clamper support can be easily attached to the frame only by bending the hinge and folding back the clamper-support inside. Assembly operation efficiency can be, therefore, further improved.

According to the fifth aspect of the present invention, in the disk apparatus according to the fourth aspect, one end of the clamper support is located on an extension of an attachment position of one of the sidewalls through the hinge and provided continuously with an outside of the one sidewall, and after the hinge is folded back inside and the clamper support is provided to be bridged between the sidewalls of the frame, the other end of the clamper support is fixed to the other sidewall. Therefore, the clamper support is formed integrally with the frame so as to extend on the extension of the attachment position of the sidewall. Therefore, the clamper support can be easily attached to the frame only by bending the hinge and folding back the clamper support inside.

According to the sixth aspect of the present invention, in the disk apparatus according to the fourth aspect, the clamper support is a T-shaped clamper support including a strip plate portion bridged between the sidewalls, and a protrusion portion extending from a central portion of the strip plate portion to a rear end of the frame, a bent portion bent into an L shape is formed on a rear end of the protrusion portion, an end of the bent portion is provided continuously with an outside of a rear end of the frame through the hinge, and the hinge is folded back inside and the strip plate portion of the clamper support is provided to be bridged between the sidewalls of the frame. Therefore, during adjustment of the pickup lens, for example, the strip plate portion functions as an external light shielding wall for the pickup lens. Thus, an adjustment operation can be, therefore, performed safely.

Implemental embodiments of the present invention will be described hereinafter with reference to the accompanying drawings. It should be noted that the embodiments are given only for illustrative purposes and that the present invention is not limited to ranges of the embodiments.

Fig. 1 is a perspective view of a disk apparatus according to a first embodiment of the present invention;

Fig. 2 is a plan view of the disk apparatus according to the first embodiment;

Fig. 3 is a plan view of a frame with which a clamper support is integrally formed according to the first embodiment;

Fig. 4 is a plan view of the frame that depicts an assembly state of the clamper support according to the first embodiment;

Fig. 5 is a cross-sectional view of the disk apparatus that depicts neighborhoods of the clamper support according to the first embodiment;

Fig. 6 is a plan view of a frame with which a clamper support is integrally formed according to a second embodiment of the present invention;

Fig. 7 is a plan view of a frame with which a clamper support is integrally formed according to a third embodiment of the present invention;

Fig. 8 is a side view of the frame with which the clamper support is integrally formed according to the third embodiment;

Fig. 9 is a plan view of a disk apparatus that depicts an assembly state of the clamper support according to the third embodiment;

Fig. 10 is a plan view of a frame with which a clamper support is integrally formed according to a fourth embodiment of the present invention;

Fig. 11 is a side view of the frame with which the clamper support is integrally formed according to the fourth embodiment; and

Fig. 12 is a plan view of a disk apparatus according to the fourth embodiment.

### (First Embodiment)

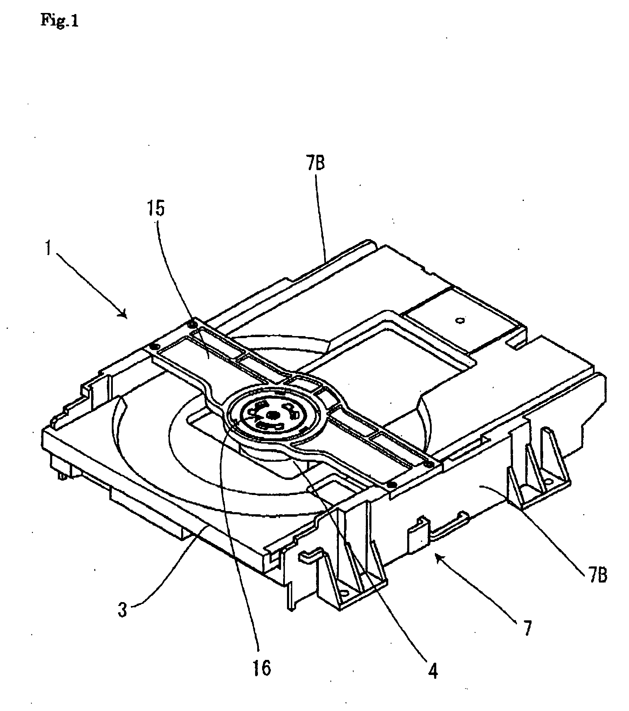

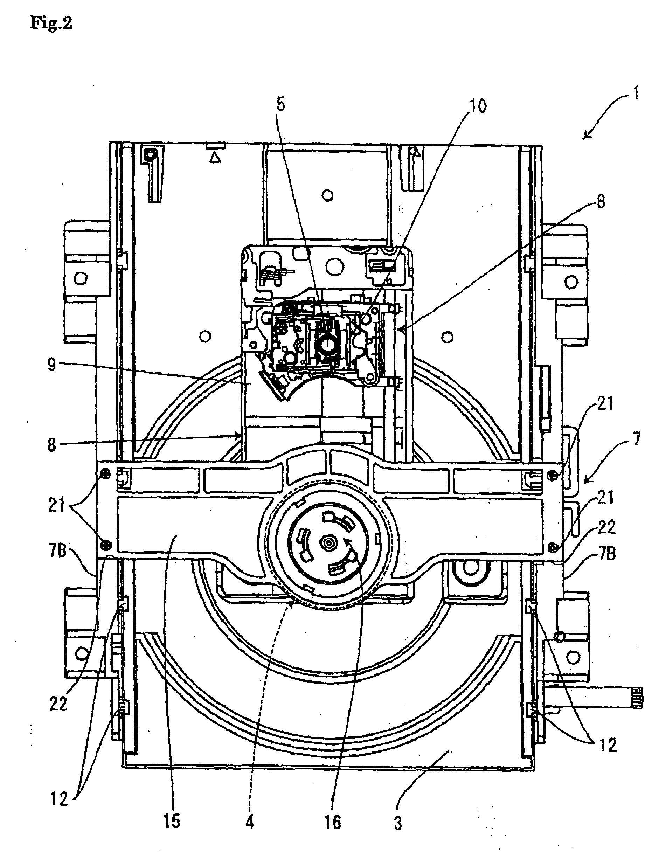

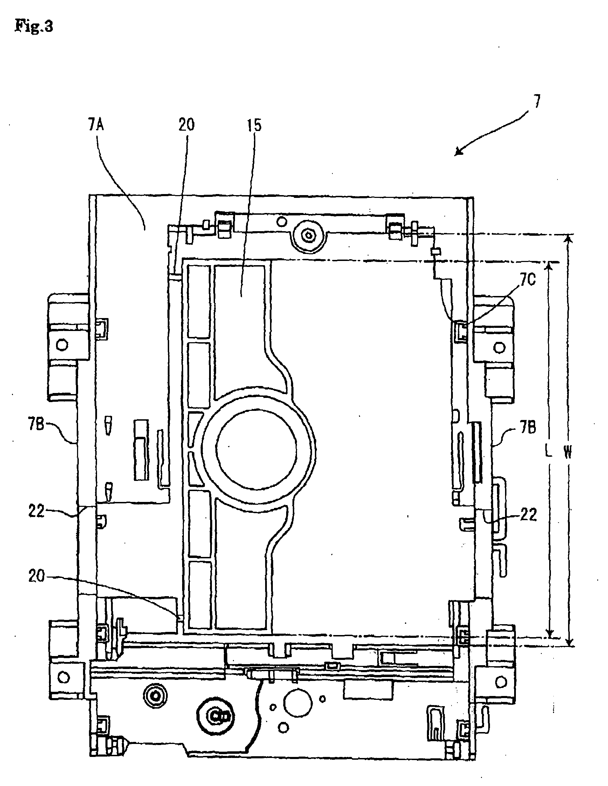

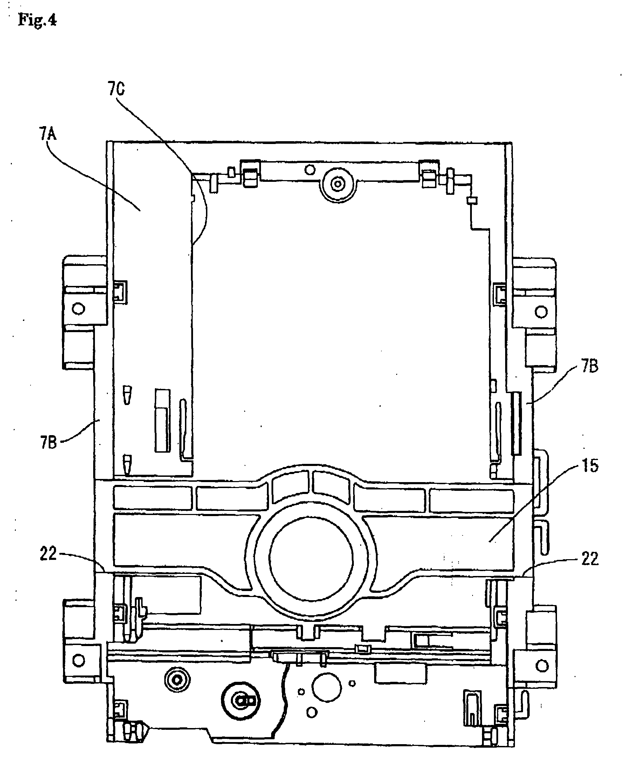

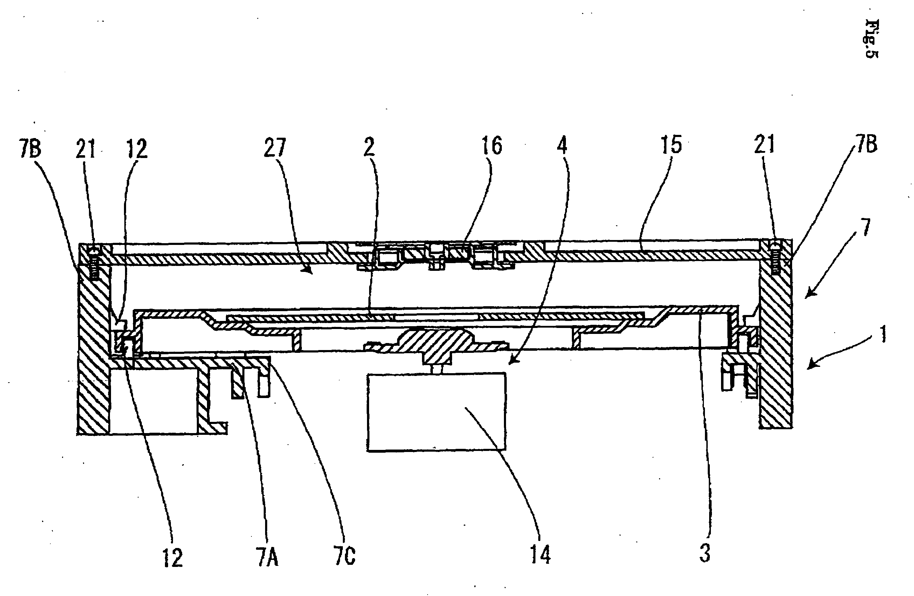

Figs. 1 to 5 show a first embodiment of the present invention. Fig. 1 is a perspective view of a disk apparatus. Fig. 2 is a plan view of the disk apparatus. Fig. 3 is a plan view of a frame with which a clamper support is integrally formed. Fig. 4 is a plan view of the frame that depicts an assembly state of the clamper support. Fig. 5 is a cross-sectional view of the disk apparatus that depicts neighborhoods of the clamper support. As shown in Figs. 1 to 5, a disk apparatus 1 according to the first embodiment includes, as principal constituent elements, a tray 3 that carries a disk 2 in and out of the disk apparatus, a turntable 4 that drives the disk 2 to rotate, a pickup lens 5 provided to be movable forward and backward of a radial direction of the disk 2, and the like. These principal constituent elements are assembled into a frame 7 consisting of synthetic resin. In addition, the turntable 4, the pickup lens 5, and a feed mechanism 8 of the pickup lens 5 are fixed to a mounting frame 9 consisting of metal, thereby constituting a mechanical unit 10.

The frame 7 includes a support frame 7A consisting of resin and extending in a horizontal direction, and a sidewall 7B formed integrally with each of a left and a right sides of the support frame 7A. The mechanical unit 10 is fixed while facing an opening 7C formed in the support frame 7A. A rail 12 guiding the tray 3 is formed on an inner surface of each sidewall 7B, and the tray 3 is moved longitudinally relative to the frame 7 along the rail 12.

The turntable 4 is configured to be driven to rotate by a spindle motor 14 arranged substantially at a center of the frame 7. A strip plate-like clamper support 15 is provided to be bridged above the turntable 4 between the sidewalls 7B of the frame 7. A clamper 16 is fixed to a central portion of the clamper support 15. The disk 2 is put between the clamper 16 and the turntable 4 so that the disk 2 can rotate.

The clamper support 15, which consists of the same resin as that for the frame 7, is formed integrally with the frame 7. As shown in Fig. 3, the clamper support 15 is arranged within the opening 7C along an edge of the frame 7. Namely, an entire length L of the clamper support 15 is set equal to a distance between the sidewalls 7B of the frame 7 so as to be bridged between upper ends of the respective sidewalls 7B of the frame 7 as shown in Fig. 4. A largest width W of the opening 7C in a longitudinal direction is set larger than the entire length L of the clamper support 15. The clamper support 15 and the frame 7 are integrally connected to each other through narrow connectors 20 that serve as runners for resin during forming, whereby the clamper support 15 and the frame 7 can be integrally formed using a common forming mold. By integrally forming the clamper support 15 and the frame 7 through the narrow connectors 20, the clamper support 15 can be separated from the frame 7 by disconnecting the connectors 20 after forming. By thus separating the frame 7 from the clamper support 15, as shown in Fig. 2, the damper support 15 is fitted into stepped grooves 22 formed on upper ends of the respective sidewalls 7B of the frame 7 and positioned while the clamper 16 is assembled with the clamper support 15 and the mechanical unit 10 is assembled with the frame 7. Both ends of the clamper support 15 bridged between the respective sidewalls 7B of the frame 7 are fixed to the upper ends of the respective sidewalls 7B by screws 21, respectively.

By connecting the frame 7 with the clamper support 15 by the connectors 20, the frame 7 and the clamper support 15 can be formed using the common forming mold. In addition, since the frame 7 and the clamper support 15 can be integrally formed while being aligned to each other substantially flat, a structure of the forming mold can be simplified. By arranging the clamper support 15 within the opening 7C, the forming mold can be made small in size. By thus simplifying the forming mold, a manufacturing cost of the forming mold can be reduced. A load applied to a driver for the forming mold can be reduced and a forming speed can be accelerated during forming since the forming mold can be made small in size and light in weight. Productivity can be thereby improved. By separating the clamper support 15 from the frame 7 and attaching the clamper support 15 after forming, the mechanical unit 10 including the metal mounting frame 9 to which the turntable 4, the pickup lens 5, and the feed mechanism 8 of the pickup lens 5 are fixed, can be easily assembled with the frame 7 while an upper portion of the frame 7 is opened and the clamper 16 can be easily assembled with the clamper support 15. Assembly operation efficiency can be thereby improved.

### (Second Embodiment)

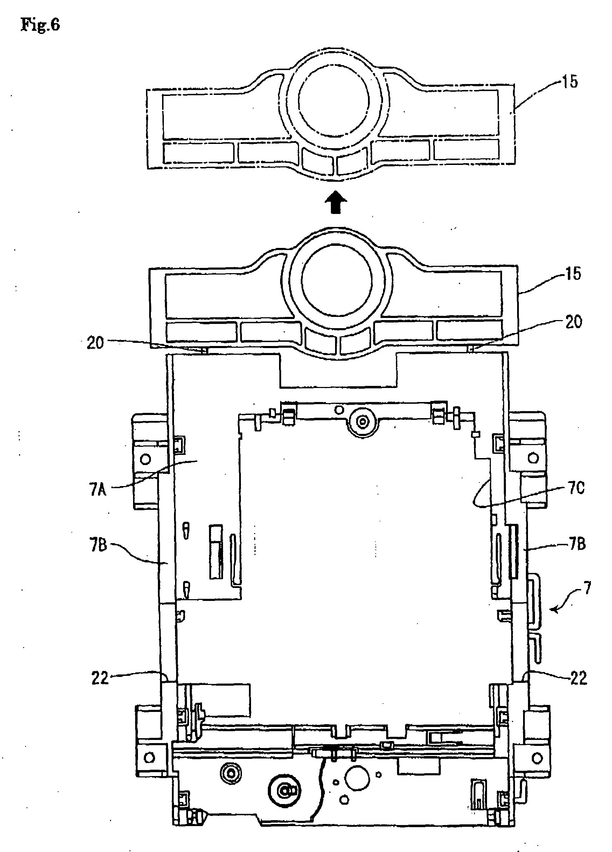

Fig. 6 shows a second embodiment of the present invention. Fig. 6 is a plan view of a frame with which a clamper support is integrally formed. In Fig. 6, the same constituent elements as those of the disk apparatus according to the first embodiment are denoted by the same reference symbols. The same constituent elements will not be repeatedly described and only different constituent elements will be described herein.

In the first embodiment, the instance of arranging the clamper support 15 within the opening 7C of the frame 7 has been described. In the second embodiment, the clamper support 15 is connected integrally with the frame 7 through the connectors 20 along an outside of a rear end of the frame 7. By thus forming the clamper support 15 integrally with the frame 7 to be provided outside of the rear end of the frame 7, the structure of the forming mold can be simplified similarly to the first embodiment. Accordingly, the manufacturing cost of the forming mold can be reduced, assembly of the constituent elements with the frame 7 and the clamper support 15 can be simplified, and assembly operation efficiency can be improved. In the first embodiment, the clamper support 15 is arranged within the opening 7C of the frame 7. It is, therefore, necessary to set at least the largest opening width W of the opening 7C to be larger than the entire length L of the clamper support 15. In the second embodiment, by contrast, the clamper support 15 is formed integrally with the frame 7 to be provided outside of the rear end of the frame. Due to this, the shape of the opening 7C is not restricted by the clamper support 15 but can be freely set. Design flexibility can be thereby improved.

### (Third Embodiment)

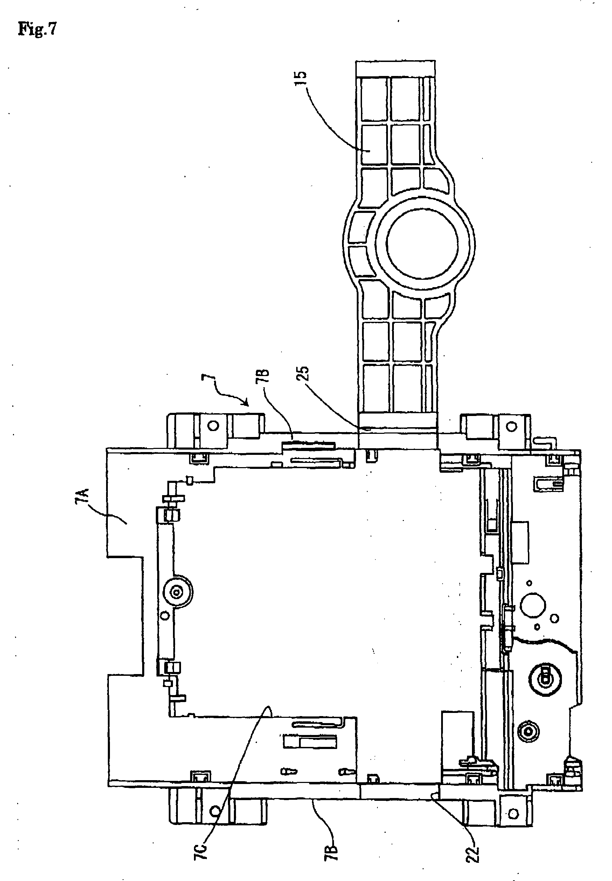

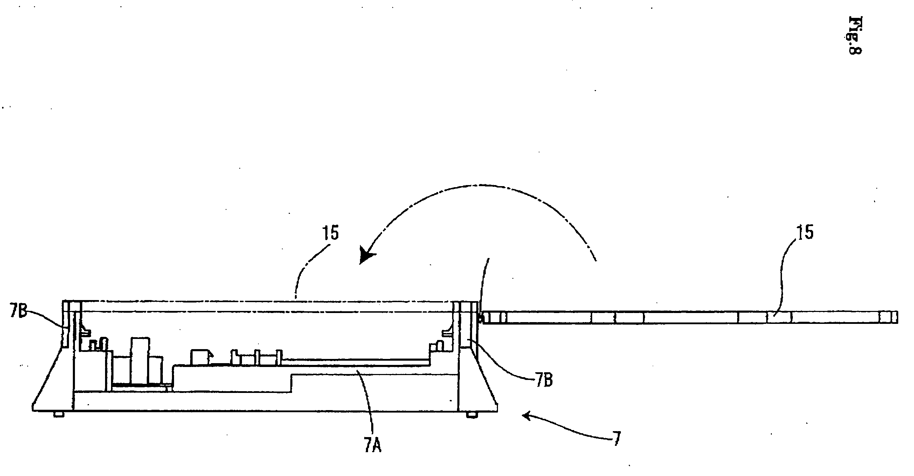

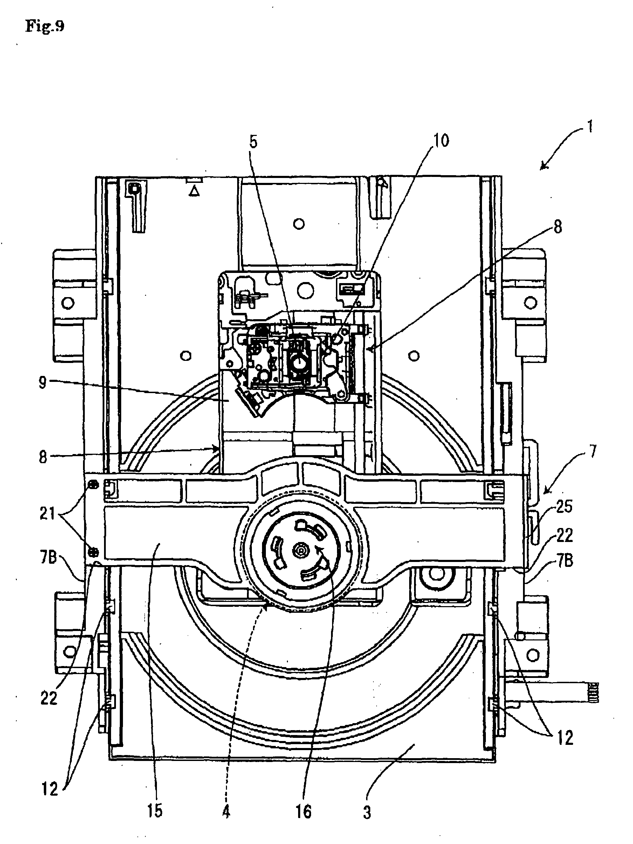

Figs. 7 to 9 show a third embodiment of the present invention. Fig. 7 is a plan view of a frame with which a clamper support is formed integrally. Fig. 8 is a side view of the frame with which the clamper support is formed integrally. Fig. 9 is a plan view of the frame that depicts an assembly state of the clamper support. In Figs. 7 to 9, the same constituent elements as those according to the first and the second embodiments are denoted by the same reference symbols. The same constituent elements will not be repeatedly described but only different elements will be described herein.

In this embodiment, one end of the clamper support 15 is formed integrally with one sidewall 7B of the frame 7 through a thin hinge 25. In addition, the clamper support 15 is formed integrally therewith so as to be located on an extension of an attachment position of the sidewall 7B and to extend to the outside of the sidewall 7B. After forming, the hinge 25 is bent to fold back the clamper support 15 inside. The clamper support 15 is thereby bridged between the respective sidewalls 7B. After providing the clamper support 15 to be bridged between the respective sidewalls 7B, the other end of the clamper support 15 located opposite to the hinge 25 is fixed by screws 21. The clamper support 15 is thereby fixed to the attachment position of the frame 7.

As can be seen, according to this embodiment, the clamper support 15 is formed integrally with one sidewall 7B of the frame 7 through the thin hinge 25, thereby simplifying the structure of the forming mold similarly to the preceding embodiment. Accordingly, the manufacturing cost of the forming mold can be reduced, the assembly of the constituent elements with the frame 7 and the mounting frame 9 can be simplified, and the assembly operation efficiency can be improved. Further, according to this embodiment, the clamper support 15 is formed integrally with one sidewall 7B so as to extend on the extension of the attachment position of the sidewall 7B. Therefore, only by bending the hinge 25 and folding back the clamper support 15 inside, the clamper support 15 can be easily fixed to the frame 7, and the clamper 16 assembled with the clamper support 15 and the turntable 4 assembled with the frame 7 can be easily positioned relative to each other. It is, therefore, possible to further improve the assembly operation efficiency and the productivity.

### (Fourth Embodiment)

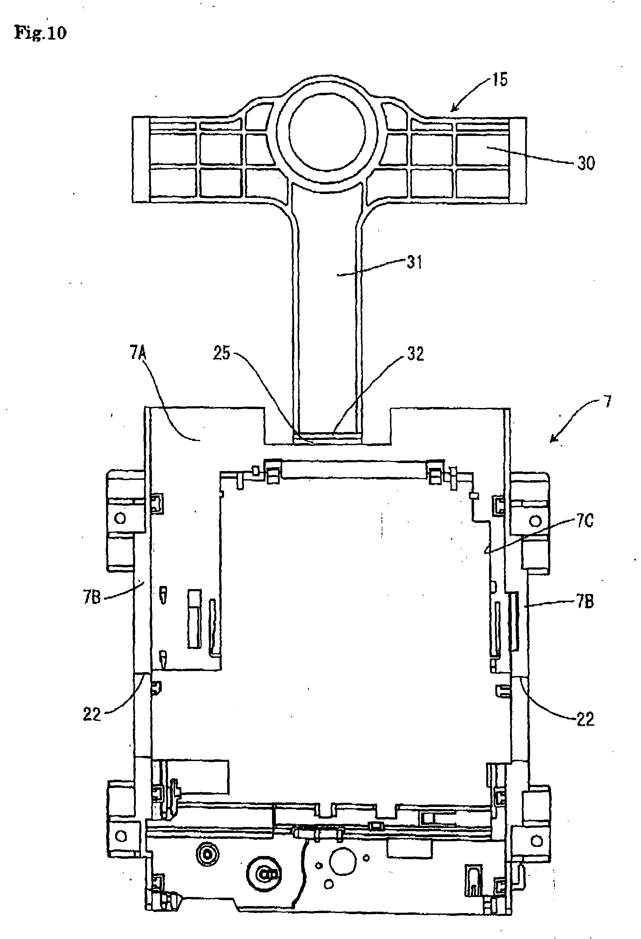

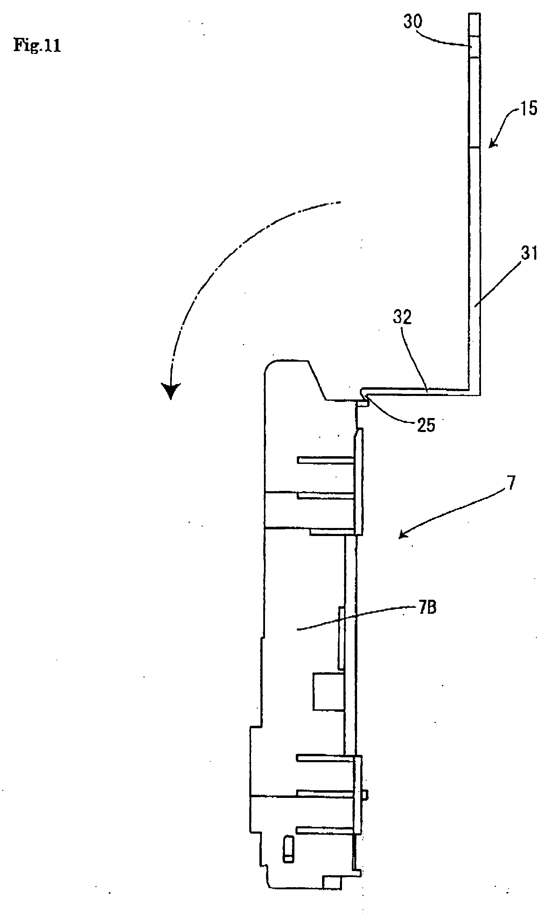

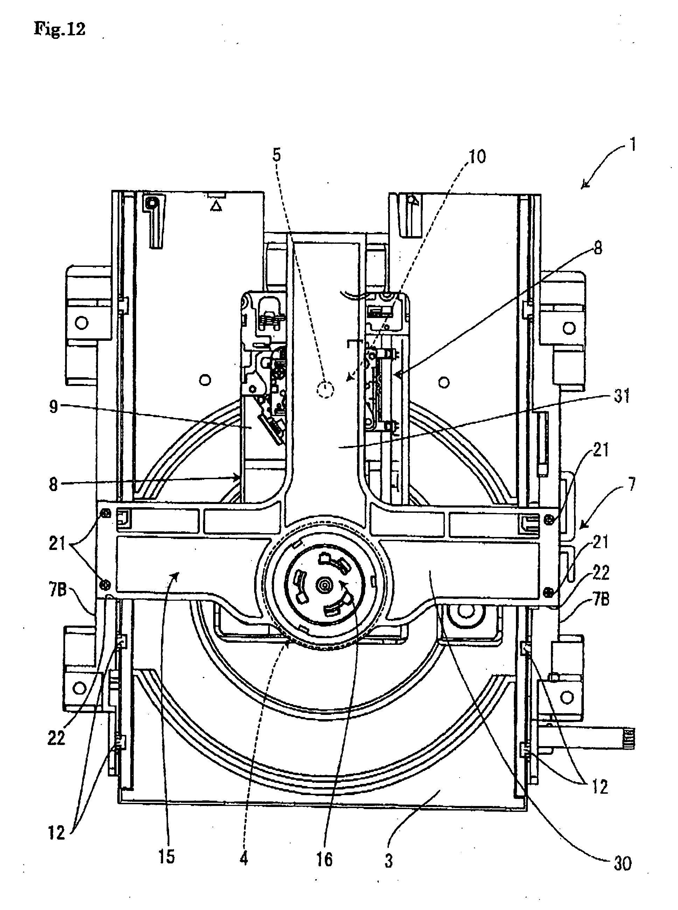

Figs. 10 to 12 show a fourth embodiment of the present invention. Fig. 10 is a plan view of a frame with which a clamper support is formed integrally. Fig. 11 is a side view of the frame with which the clamper support is formed integrally. Fig. 12 is a plan view of a disk apparatus. In Figs. 10 to 12, the same constituent elements as those of the disk apparatus according to the first to the third embodiments are denoted by the same reference symbols. The same constituent elements will not be repeatedly described but only different constituent elements will be described herein.

According to this embodiment, similarly to the third embodiment, the clamper support 15 is formed integrally with the frame 7 through the hinge 25. However, this embodiment differs from the third embodiment in the shape of the clamper support 15 and the position of the hinge 25. Namely, in this embodiment, the clamper support 15 is a T-shaped clamper support including a strip plate portion 30 to be bridged between the sidewalls 7B of the frame 7 and a protrusion portion 31 extending from a central portion of the strip plate portion 30 to a rear end of the frame 7. A bent portion 32 bent in an L shape is formed on a rear end of the protrusion portion 31, and an end of the bent portion 32 is provided continuous to the outside of the rear end of the frame 7 through the hinge 25. By folding back the hinge 25 inside, the strip plate portion 30 of the clamper support 15 is bridged between the sidewalls 7B. Thus, similarly to the third embodiment, only by bending the hinge 25 and folding back the clamper support 15 inside, the clamper support 15 can be fixed to the frame 7 while the clamper 16 assembled with the clamper support 15 and the turntable 4 assembled with the frame 7 are positioned relative to each other. Further, in this embodiment, the clamper support 15 is T-shaped and the mechanical unit 10 assembled with the frame 7 and consisting of the pickup lens 5 and the feed mechanism 8 of the pickup lens 5 is covered with the protrusion portion 31. Due to this, during adjustment of the pickup lens 5, for example, the protrusion portion 31 functions as an external light shielding wall for the pickup lens 5. An adjustment operation can be, therefore, performed safely and efficiently.

The embodiments of the present invention have been described so far. However, the present invention is not limited to the embodiments but various changes and modifications can be made to the present invention within the scope of the invention. For example, in the embodiments, the instance in which the clamper support 15 is fixed to the frame 7 by the screws 21 has been described. Alternatively, the clamper support 15 may be fixed to the frame 7 by engagement means such as hooks. In addition, the shape, the attachment structure, and the like of the clamper support 15 may be appropriately selected.

## Claims

1. A disk apparatus comprising:
a tray on which a disk storage medium is mounted;
a turntable that floats up the disk storage medium mounted on the tray, and that drives the disk storage medium to rotate;
a pickup lens that irradiates a laser light on a recording surface of the disk storage medium, and that records and reproduces data in and from the disk storage medium;
a frame with which the tray, the turntable, and the pickup lens are assembled, that includes a support frame extending horizontally so as to movably guide the tray and a pair of sidewalls formed integrally with left and right edges of the support frame, respectively, and that consists of resin;
a clamper that holds the disk storage medium floated up from the tray between the clamper itself and the turntable; and
a clamper support that supports the clamper, and that is provided between the sidewalls, wherein
the clamper support is formed out of the same resin as that for the frame,
the frame is provided to be aligned with the clamper support and formed integrally with the clamper support through a disconnectable connector, and
after forming, the clamper support is separated from the frame and provided to be bridged between the sidewalls of the frame.

2. The disk apparatus according to claim 1, wherein
an opening into which at least the pickup lens is assembled is formed in the support frame,
a largest width of the opening is set larger than an entire length of the clamper support, and
the clamper support is formed integrally with an interior of the opening through the connector.

3. The disk apparatus according to claim 1, wherein
the clamper support is formed integrally with an outside of one edge of the support frame through the connector.

4. A disk apparatus comprising:
a tray on which a disk storage medium is mounted;
a turntable that floats up the disk storage medium mounted on the tray, and that drives the disk storage medium to rotate;
a pickup lens that irradiates a laser light on a recording surface of the disk storage medium, and that records and reproduces data in and from the disk storage medium;
a frame with which the tray, the turntable, and the pickup lens are assembled, that includes a support frame extending horizontally so as to movably guide the tray and a pair of sidewalls formed integrally with left and right edges of the support frame, respectively, and that consists of resin;
a clamper that holds the disk storage medium floated up from the tray between the clamper itself and the turntable; and
a clamper support that supports the clamper, and that is provided between the sidewalls, wherein
the clamper support is formed out of the same resin as that for the frame,
the frame is provided to be aligned with the clamper support and formed integrally with the clamper support through a hinge, and
after forming, the hinge is bent and the clamper support is provided to be bridged between the sidewalls of the frame.

5. The disk apparatus according to claim 4, wherein
one end of the clamper support is located on an extension of an attachment position of one of the sidewalls through the hinge and provided continuously with an outside of the one sidewall, and
after the hinge is folded back inside and the clamper support is provided to be bridged between the sidewalls of the frame, the other end of the clamper support is fixed to the other sidewall.

6. The disk apparatus according to claim 4, wherein
the clamper support is a T-shaped clamper support including a strip plate portion bridged between the sidewalls, and a protrusion portion extending from a central portion of the strip plate portion to a rear end of the frame,
a bent portion bent into an L shape is formed on a rear end of the protrusion portion,
an end of the bent portion is provided continuously with an outside of a rear end of the frame through the hinge, and
the hinge is folded back inside and the strip plate portion of the clamper support is provided to be bridged between the sidewalls of the frame.
